# EUROPEAN PATENT SPECIFICATION

(11) **EP 2 421 740 B1**
(45) Date of publication and mention of the grant of the patent: **19.06.2013**
(21) Application number: 10713991.7
(22) Date of filing: 19.04.2010
(51) Int. Cl.: B62B 7/08

(54) **STROLLER OR BUGGY**
SPORTWAGEN ODER KINDERWAGEN
POUSSETTE OU BUGGY

(30) Priority: 20.04.2009 EP 09158222
(43) Date of publication of application: 29.02.2012
(73) Proprietor: NPK Design BV, 2311 CD Leiden (NL)
(72) Inventor: VAN DER VEGT, Herman, NL-3512LL Utrecht (NL); BOUWKNEGT, Janwillem, NL-2317 Ka Leiden (NL)
(74) Representative: De Vries & Metman
(86) International application number: PCT/EP2010/055135
(87) International publication number: WO 2010/121994

(56) References cited:
- WO-A-2008/145523
- US-A- 3 881 739
- US-A- 3 967 833
- US-A- 4 335 893

## Description

The invention concerns a stroller or buggy in accordance with the preamble of claim 1, as shown for example by WO 2008/145523 A2. The disadvantage of the known strollers is that they are often unstable when in use and/or that it is complicated to fold them. In order to overcome this disadvantage the stroller or buggy is in accordance with claim 1. By folding the frame around a shaft that is stable enough to connect to the front wheel(s), the stroller is stable when in use and can be folded to a compact volume.

In accordance with an embodiment, the stroller or buggy is according to claim 2. By axially moving, the central frame shaft with the front wheel(s) the stroller can be folded more compact.

In accordance with an embodiment, the stroller or buggy is according to claim 3. In this way when in use the first and second frame are kept extended in a stable way.

In accordance with an embodiment, the stroller or buggy is according to claim 4. In this way, the central frame shaft is easy to lift so that the first and second frame can fold.

In accordance with an embodiment, the stroller or buggy is according to claim 5. In this way, unlocking and thereafter folding the first and second frame by lifting the central frame shaft can be done with one hand.

In accordance with an embodiment, the stroller or buggy is according to claim 6. In this way, the length of the folded stroller can be reduced by sliding the vertical supports downwards relative to the first frame and the second frame.

In accordance with an embodiment, the stroller or buggy is according to claim 7. In this way, folding the wheel arm of a hind wheel also reduces the extending length of the vertical supports.

In accordance with an embodiment, the stroller or buggy is according to claim 8. In this way, the length of the stroller reduces simultaneously at the upper side and at the underside.

In accordance with an embodiment, the stroller or buggy is according to claim 9. In this way, the synchronisation is stiff and stable so that the axially movable parts are positioned in a stable manner.

The invention will be explained in more detail below with reference to several exemplary embodiments by means of a drawing, in which:
Figure 1 shows a front view of a buggy standing on the floor according to a first embodiment of the invention,
Figure 2 shows a rear view of the buggy of figure 1,
Figure 3 shows the side view of the buggy of figure 1,
Figure 4 shows a perspective front view of the buggy of figure 1,
Figure 5 shows a side view of the buggy of figure 1 during folding a vertical support towards the floor,
Figure 6 shows a side view of the buggy of figure 1 lying on the floor after folding,
Figure 7 shows a perspective view of the buggy of figure 1 after lifting a central frame shaft,
Figure 8 shows schematically the folding of a first frame and a second frame,
Figure 9 shows schematically a coupling for coupling the axial movement of the central frame shaft and a vertical support, and
Figure 10 shows a perspective front view of a further embodiment of the invention.

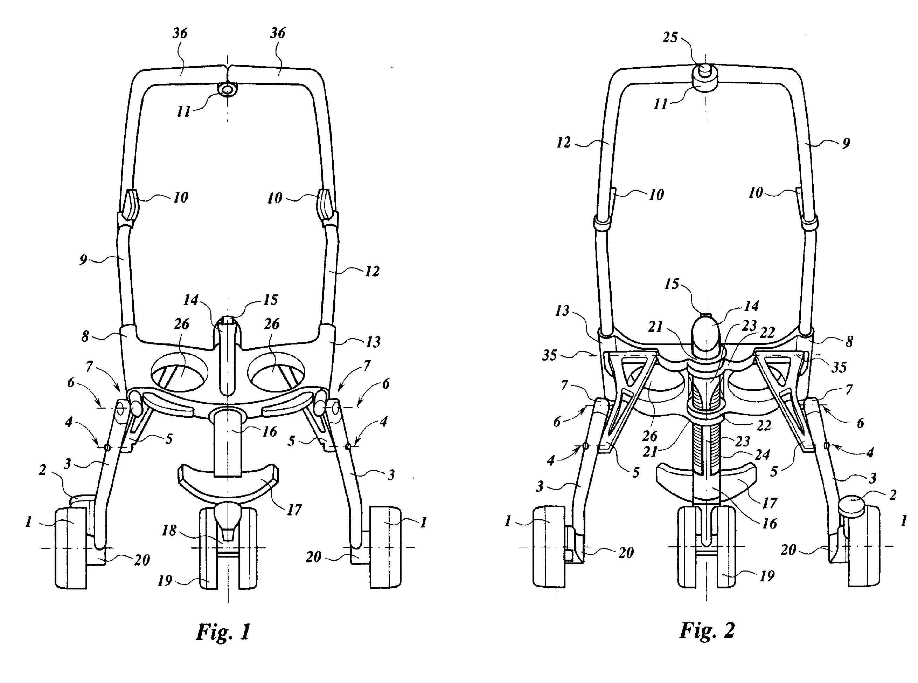

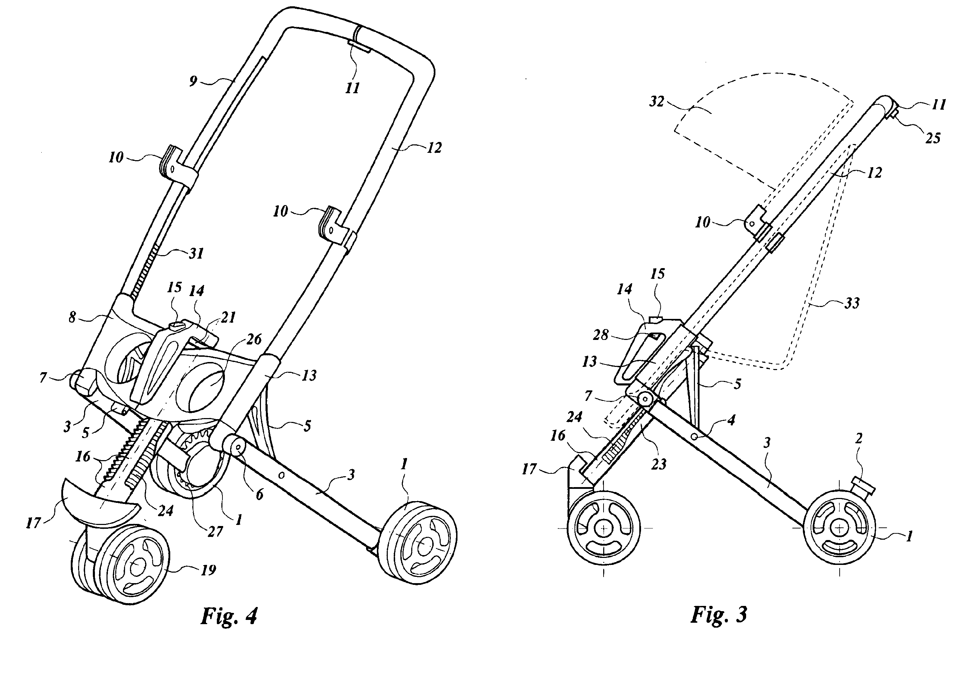

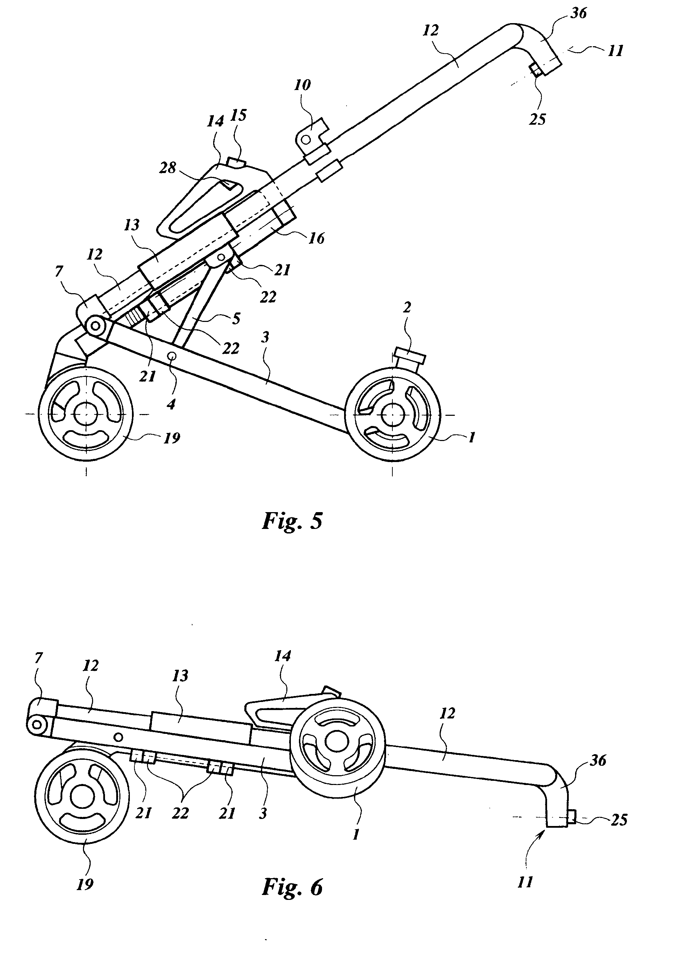

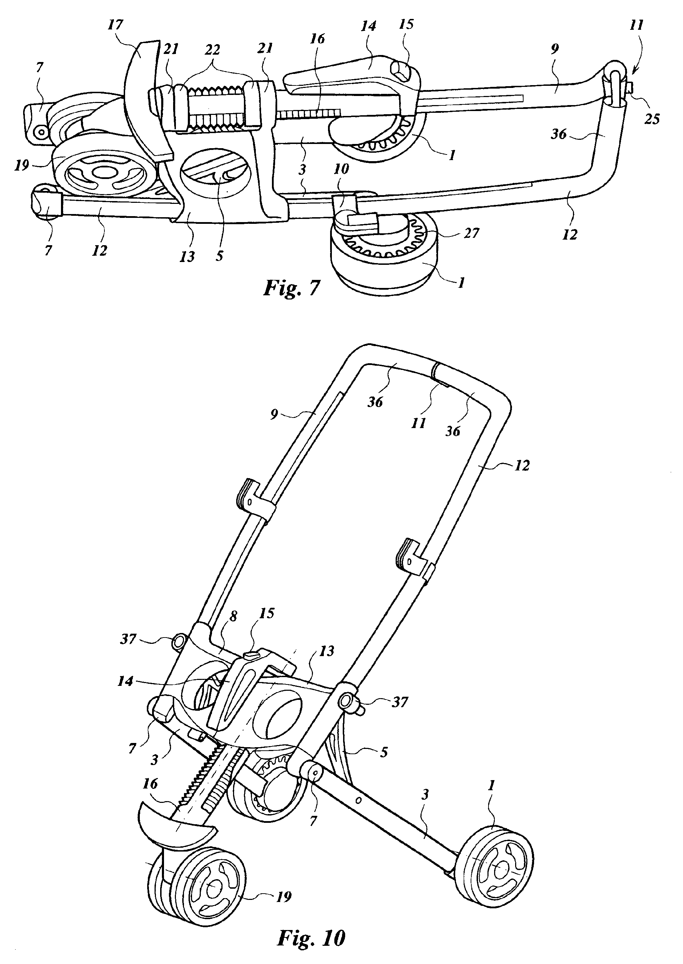

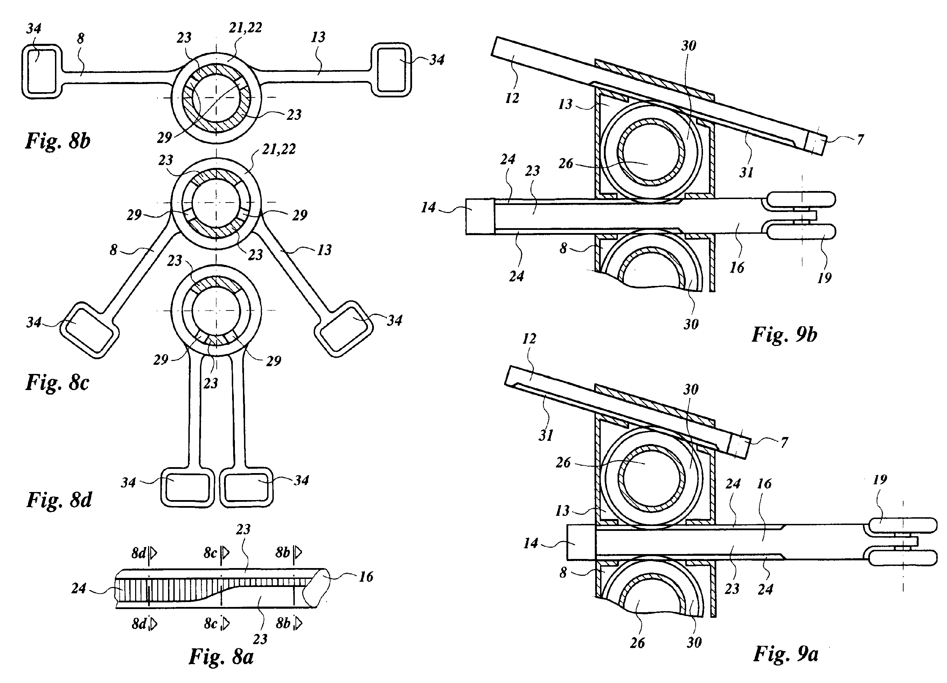

Figures 1 - 4 show a buggy standing on a floor in a position wherein it can support a child seat 33 (indicated with interrupted lines in figure 3). A first vertical support 9 and a second vertical support 12 support respectively the sides of the child seat 33 and a first frame 8 and a second frame 13 support the child seat 33 at the underside. The first frame 8 has two first frame rings 22 that fit around a central frame shaft 16 and the second frame 13 has two second frame rings 21 that fit around the central frame shaft 16 as well so that the first frame 8 and the second frame 13 can hinge around the central frame shaft 16. The central frame shaft 13 can move axially through the rings 21 and 22 between a lower position, as shown in figures 1-4 and an upper position as shown in figures 6 and 7. In the lower position of the central frame shaft 13, the first frame 8 and the second frame 13 are fixed in a position where they extend sideways. In the upper position of the central frame shaft 13, the first frame 8 and the second frame 13 can be folded towards each other by rotating them around the central frame shaft 16 as shown in figures 7 and 8.

As shown in figure 8 each frame 8 and 13 has a pin 29 that cooperates with the cam surfaces 23 on the central frame shaft 16 to limit rotation around the central frame shaft 16. In the lower position shown in section 8b, the cam surfaces 23 make the rotation of the frames 8 and 13 impossible and keep the frames 8 and 13 approximately in one plane. With the central frame shaft 16 halfway between the lower position and the upper position as shown in section 8c the cam surfaces 23 make the rotation of the first frame 8 and the second frame 13 over a limited angle possible. In the upper position of the central frame shaft 16 as shown in section 8d the first frame 8 and the second frame 13 can rotate over approximately 90 degrees, so that after moving the frame shaft 16 upwards to the upper position they can be folded against each other. The cam surfaces 23 are shaped such that axially moving the central frame shaft 16 downwards forces the first frame 8 and the second frame 13 to move to a sideways extending position and further movement locks them in this position.

At the side away from the central frame shaft 16, the first frame 8 has a pipe shaped opening 34 (see figure 8) in which the first vertical support 9 is mounted. In the shown embodiment, the first vertical support 9 can slide in the opening 34 and the first vertical support 9 and the central frame shaft 16 are in a common plane. At the lower end of the first vertical support 9, a wheel arm hinge 7 connects the first vertical support 9 to a wheel arm 3 so that the wheel arm can rotate around rotation axis 6.

Bracket 5 couples at one side hingeable to the first frame 8 and can rotate there around a rotation axis 35 and at the other side to the wheel arm 3 with a bracket hinge 4. By moving the first vertical support 9 through the opening 34, the wheel arm 3 swivels in the hinge 7 around the rotation axis 6. In the embodiment, the wheel arm rotation axis 6 and the rotation axes of the bracket hinge 4 and the rotation axis 35 are parallel. In this way, the bracket 5 gives sideways support to the wheel arm 3 to increase stability. To improve this the hinge of the bracket 5 on the first frame 8 extends on the first frame 8 to at least halfway from the opening 34 for the first vertical support 9 towards the central frame shaft 16.

The wheel arm 3 swivels in the hinge 7 between a position wherein the wheel arm 3 is parallel to a plane formed by the first vertical support 9 and the central frame shaft 16 and a position wherein the wheel arm 3 is approximately perpendicular to the first vertical support 9. The first vertical support 9 makes a small angle, for instance 3 - 6 degrees, with the axis of the central frame shaft 16 and the rotation axis 6 makes a similar angle with the perpendicular on the axis of the central frame shaft 16. In folded position, the wheel arm 3 is more or less against the first vertical support 9 and when folded out the wheel arm 3 extends slightly outwards so that the width between the wheels 1 is more than the maximum width of other parts of the buggy.

In a similar way as described above the second vertical support 12 can slide through the opening 34 in the second frame 13. This sliding movement swivels the wheel arm 3 that is connected with the hinge 7 to the second vertical support 12. The wheel arm 3 moves between a position wherein the wheel arm 3 is parallel to the second vertical support 12 and/or the central frame shaft 16 and a position wherein the wheel arm 3 is approximately perpendicular to the second vertical support 12.

A hind wheel support 20 couples each wheel arm 3 with the hind wheel 1. The hind wheel 1 has a brake wheel surface 27 that cooperates with a resilient brake pin (not shown) for braking the hind wheel 1. A brake activator 2 mounted on one of the hind wheels 1 activates and deactivates the brake pins in both wheels 1, for this a cable such as a Bowden cable (not shown) couples the brake pins.

A front wheel support 18 couples the central frame shaft 16 to wheels 19. The wheels 19 in this embodiment are a pair of wheels at a small distance or more or less against each other. In some embodiments, this distance is enlarged to increase stability, in other embodiments there is only one wheel 19. Although it is not essential, the front wheel support 18 has a footrest 17, whereon a child sitting in the child seat 33 can rest its feet or the footrest protects parts supported by the frame 8, 13 to get entangled with the wheel 19.

As discussed above the central frame shaft 16 can move axially in the frame rings 21 and 22 of the first frame 8 and second frame 13. For this axial movement a handle 14 is mounted on the top of the central frame shaft 16. In the lower position of the central frame shaft 16, a movable notch (not shown) keeps the frame rings 21 and 22 in an axially fixed position around the central frame shaft 16. A knob 15 mounted in the handle 14 releases this movable notch and a lock 28 prevents inadvertent movement of the knob 15 so that it is not possible to accidentally move the central frame shaft 16 axially.

The first vertical support 9 and the second vertical support 12 extend upwards and at their upper level each vertical support forms a grip 36 that extends horizontally so that the user can push the buggy forward. Although it is not essential, an upper hinge 11 connects the grips 36 and automatically locks the grips 36 when they are approximately in line. A knob 25 unlocks the hinge 11 to make it possible that the first and second vertical supports 9 and 12 are folded together. As shown in figure 3 the child seat 33 is attached to the first and second vertical supports 9 and 12. The first vertical support 9 and the second vertical support 12 each have a hood clamp 10 that support a hood 32. The child seat 33 and if applicable the hood 32 is removable from the buggy or is made of material that can be folded, such as cloth.

In order to improve the ease of folding the buggy, gears 30 (see figure 9) couple the axial movement of the central frame shaft 16 to the axial movement of the first vertical support 9 and the second vertical support 13. Figure 9a show the central frame shaft 16 in the lower position. The central frame shaft 16 has a cylindrical tooth rack 24 that meshes with the gears 30 and the first vertical support 9 and the second vertical support 12 have a tooth rack 31 that each mesh with one of the gears 30. The gears 30 center around a cylindrical wall of an opening 26 in the first frame 8 and the second frame 13 respectively. The single gear 30 synchronises the axial movement of the central frame shaft 16 and the first vertical support 9 and the second vertical support 12 respectively.

Figure 9b shows the central frame shaft 16 in the upper position. In this the distance the front wheel 19 extends an equal or smaller distance than the hinge 7 under the first frame 8 and the second frame 13, which is approximately similar to the situation shown in figure 6 and shows that the length of the vertical supports 9,12 determines the maximum length of the folded buggy.

In other embodiments the synchronisation of the axial movements of the central frame shaft 16 with the first vertical support 9 or the second vertical support 12 can be effected in other ways, for instance with a Bowden cable, or more than one gear between the central frame shaft 16 and the vertical supports 9, 12.

The cam surface 23 borders the cylindrical tooth rack 24 (see figure 8a) and this limits the area that can mesh with the gear 30. This means that the gear 30 in combination with cam surface 23 prevents the rotation of the first frame 8 and the second frame 13 around the central frame shaft 16. In this way, the gear 30 can have the same function or can come in place of the pin 29 as described earlier.

Figures 5, 6 and 7 show the buggy during folding. After the lock 28 that releases the knob 15 is activated and the movable notch blocking the axial movement of the central frame shaft 16 releases this axial movement and also the first and second vertical supports 9,12 start moving via gear 30 and the buggy starts folding under its own weight. The brackets 5 push the first and second frames 8, 13 upwards and the gear 30 pushes the central frame shaft 16 the same distance downwards so that the wheels 19 remain approximately on the same position and the first and second vertical supports 9, 12 start tilting towards the ground. The knob 25 is activated to release the fixation of the upper hinge 11 so that the first and second vertical supports 9, 12 can rotate relative to each other. This improves the axial sliding of the vertical supports 9, 12 in this embodiment where the openings 34 in the first frame 8 and the second frame 13 are not parallel.

After the central frame shaft 16 is in the upper position with the wheel arms 3 against the first and second vertical supports 9, 12, the operator grips the handle 14 and lifts the buggy. Through their weight the first frame 8 and the second frame 13 fold towards each other and the buggy gets its smallest volume and can be stored in a car or a cupboard.

When making the folded buggy ready for use, the user lays the buggy on the floor with the first vertical support 9 and the second vertical support 12 extending sideways with the front wheel 19 resting on the floor. Then the user lifts the first and second vertical supports 9, 12 whereby the wheel arms 3 will fold downwards under the weight of the wheels 1. This will move the central frame shaft 16 to its lower position so that it locks the first and second frames 8, 13 in the sideway extending position and the bolt will lock the axial movement of the first and second frames 8, 13 and the buggy is ready for use.

Figure 10 shows a simplified embodiment with similar parts as described earlier. In this embodiment, there is no synchronisation between the axial movements of the central frame shaft 16 and the first vertical support 9 or the second vertical support 12. Locks 37 keep the first vertical support 9 and the second vertical support 12 in a fixed axial position and for this the first and second vertical supports 9, 13 have a notch or hole that cooperates with the lock 37. Releasing the lock 37 lets the wheel arm 3 fold against the vertical supports 9, 12. Gripping the handle 14 and activating the knob 15 makes axial movement of the central frame shaft 16 possible so that after this axial movement the buggy can be folded to its smallest dimensions as described earlier.

In further simplified embodiments it is also possible to couple the bracket 5 to the central frame shaft 16 so that its axial movement to the upper position folds the wheel arms 3 and also the first frame 8 and the second frame 13 against each other. In the lower position of the central frame shaft 16, the brackets 5 keep the wheel arms 3 approximately perpendicular to the first vertical support 9 and the second vertical support 12.

The described embodiments are suitable for use with a child seat 33 fastened to the first vertical support 9 and the second vertical support 12. The buggy is also suitable for child seats that are coupled to other parts of the buggy, for instance to a bracket mounted on the central frame shaft 16. Other embodiments of the buggy are suitable for carrying child safety car seats or bags such as golf bags.

## Claims

1. Stroller or buggy for transporting a sitting child comprising a frame(8,13), vertical supports (9,12) extending upwards above the frame and suitable for supporting a child seat (33), and one or two front wheels (19) and two hind wheels (1) attached via wheel arms (3, 16) to the frame, the frame comprising a first frame (8) and a second frame (13) coupled by a hinge axis, **characterized in that** the first frame and the second frame can rotate around the hinge axis between a sideways extending position and a folded position, and **in that** a central frame shaft (16) couples the front wheel(s) (19) to the frame and forms the hinge axis.

2. Stroller or buggy in accordance with claim 1 wherein the first frame (8) and the second frame (13) have rings (21,22) and the central frame shaft (16) can move in axial direction through these rings between an upper position and a lower position.

3. Stroller or buggy in accordance with claim 1 or 2 wherein the central frame shaft (16) is provided with cams (23) that keep the first frame (8) and the second frame (13) in the sideways extending position when the central frame shaft is in the lower position and preferably that guide the first and second frame towards the sideways extending position when the central frame shaft moves towards the lower position.

4. Stroller or buggy in accordance with one of the previous claims wherein the central frame shaft (16) has a handle (14) mounted on top.

5. Stroller or buggy in accordance with the previous claim wherein a knob (15) on the handle (14) connected to a movable notch on the central frame shaft (16) blocks the axial movement of the central frame shaft relative to the first frame (8) and the second frame (13).

6. Stroller or buggy in accordance with one of the previous claims wherein each vertical support (9, 12) can move in axial direction relative to respectively the first frame (8) or the second frame (13).

7. Stroller or buggy in accordance with the previous claim wherein a hinge (7) connects a wheel arm (3) of a hind wheel (1) to a vertical support (9, 12) and wherein a bracket (5) between the wheel arm and respectively the first frame (8) or the second frame (13) swivels the wheel arm between parallel to the vertical support and approximately perpendicular to the vertical support when the vertical support moves axially to respectively the first frame or the second frame.

8. Stroller or buggy in accordance with one of the previous claims wherein synchronisation (24,30,31) means couples the axial movements of the central frame shaft (16) and the vertical supports (9,12).

9. Stroller or buggy in accordance with the previous claim wherein the synchronisation means comprises a gear (30) mounted on the first frame (8) and the second frame (13) and gear racks (24,31) mounted on the central frame axis (16) and the vertical supports (9,12).

## Patentansprüche

1. Kinderwagen oder Buggy zum Transportieren eines sitzenden Kindes, aufweisend einen Rahmen (8, 13), vertikale Träger (9, 12), die sich nach oben über dem Rahmen erstrecken, und geeignet sind zum Tragen eines Kindersitzes (33), und ein oder zwei Vorderräder (19) und zwei hintere Räder (1) befestigt mittels Radarmen (3, 16) an den Rahmen, wobei der Rahmen einen ersten Rahmen (8) und einen zweiten Rahmen (13) aufweist, die durch eine Scharnierachse gekoppelt sind, **dadurch gekennzeichnet, dass** der erste Rahmen und der zweite Rahmen um die Scharnierachse herum rotieren können, zwischen einer sich seitlich erstreckenden Position und einer gefalteten Position, und dadurch, dass eine zentrale Rahmenwelle (16) das Vorderrad (die Vorderräder) (19) an den Rahmen koppelt und die Scharnierachse bildet.

2. Kinderwagen oder Buggy gemäß Anspruch 1, wobei der erste Rahmen (8) und der zweite Rahmen (13) Ringe (21, 22) haben, und sich die zentrale Rahmenwelle (16) in axialer Richtung durch diese Ringe zwischen einer oberen Position und einer unteren Position bewegen kann.

3. Kinderwagen oder Buggy gemäß Anspruch 1 oder 2, wobei die zentrale Rahmenwelle (16) mit Nocken (23) versehen ist, die den ersten Rahmen (8) und den zweiten Rahmen (13) in der sich seitlich erstreckenden Position halten, wenn die zentrale Rahmenwelle in der unteren Position ist, und vorzugsweise, die den ersten und zweiten Rahmen in Richtung der sich seitlich erstreckenden Position führen, wenn sich die zentrale Rahmenwelle in Richtung der unteren Position bewegt.

4. Kinderwagen oder Buggy gemäß einem der vorhergehenden Ansprüche, wobei die zentrale Rahmenwelle (16) einen Griff (14) hat, der obenauf montiert ist.

5. Kinderwagen oder Buggy gemäß dem vorhergehenden Anspruch, wobei ein Knopf (15) an dem Griff (14), der verbunden ist mit einer beweglichen Aussparung auf der zentralen Rahmenwelle (16), die axiale Bewegung von der zentralen Rahmenwelle bezüglich zu dem ersten Rahmen (8) und dem zweiten Rahmen (13) blockiert.

6. Kinderwagen oder Buggy gemäß einem der vorhergehenden Ansprüche, wobei jeder vertikale Träger (9, 12) sich in axialer Richtung bezüglich zu jeweils dem ersten Rahmen (8) oder dem zweiten Rahmen (13) bewegen kann.

7. Kinderwagen oder Buggy gemäß dem vorhergehenden Anspruch, wobei ein Gelenk (7) einen Radarm (3) von einem hinterem Rad (1) mit einem vertikalen Träger (9, 12) verbindet, und wobei eine Halterung (5) zwischen dem Radarm und jeweils dem ersten Rahmen (8) oder dem zweiten Rahmen (13) den Radarm zwischen parallel zu dem vertikalen Träger und ungefähr senkrecht zu dem vertikalen Träger schwenkt, wenn der vertikale Träger sich axial bezüglich jeweils dem ersten Rahmen oder dem zweiten Rahmen bewegt.

8. Kinderwagen oder Buggy gemäß einem der vorhergehenden Ansprüche, wobei Synchronisationsmittel (24, 30, 31) die axialen Bewegungen von der zentralen Rahmenwelle (16) und den vertikalen Trägem (9, 12) koppeln.

9. Kinderwagen oder Buggy gemäß dem vorhergehenden Anspruch, wobei die Synchronisationsmittel ein Getriebe (30) aufweisen, das an den ersten Rahmen (8) und den zweiten Rahmen (13) montiert ist, und Getriebestangen (24, 31), die an die zentrale Rahmenachse (16) und die vertikalen Träger (9, 12) montiert sind.

## Revendications

1. Poussette ou voiture d'enfant destinée à transporter un enfant assis, comprenant un bâti (8, 13), des supports verticaux (9, 12) s'étendant vers le haut au-dessus du bâti et appropriés pour supporter un siège d'enfant (33), et une ou deux roues avant (19) et deux roues arrière (1) fixées via des bras de roues (3, 16) sur le bâti, le bâti comprenant un premier bâti (8) et un second bâti (13) couplé par un axe charnière, **caractérisé en ce que** le premier bâti et le second bâti peuvent tourner autour de l'axe charnière entre une position s'étendant latéralement et une position repliée, et **en ce qu'**un arbre de bâti central (16) couple la ou les roues avant (19) au bâti et forme l'axe charnière.

2. Poussette ou voiture d'enfant selon la revendication 1, dans laquelle le premier bâti (8) et le second bâti (13) présentent des bagues (21, 22) et l'arbre de bâti central (16) peut se déplacer dans la direction axiale à travers ces bagues entre une position supérieure et une position inférieure.

3. Poussette ou voiture d'enfant selon la revendication 1 ou 2, dans laquelle l'arbre de bâti central (16) est doté de cames (23) qui maintiennent le premier bâti (8) et le second bâti (13) dans la position s'étendant latéralement lorsque l'arbre de bâti central se trouve dans la position inférieure, et qui guident de préférence le premier bâti et le second bâti vers la position s'étendant latéralement lorsque l'arbre de bâti central se déplace vers la position inférieure.

4. Poussette ou voiture d'enfant selon l'une des revendications précédentes, dans laquelle l'arbre de bâti central (16) présente une poignée (14) montée sur le dessus.

5. Poussette ou voiture d'enfant selon la revendication précédente, dans laquelle un bouton (15) situé sur la poignée (14) connecté à une encoche mobile sur l'arbre de bâti central (16), bloque le déplacement axial de l'arbre de bâti central par rapport au premier bâti (8) et au second bâti (13).

6. Poussette ou voiture d'enfant selon l'une des revendications précédentes, dans laquelle chaque support vertical (9, 12) peut se déplacer dans une direction axiale respectivement par rapport au premier bâti (8) ou au second bâti (13).

7. Poussette ou voiture d'enfant selon la revendication précédente, dans laquelle une charnière (7) relie un bras de roue (3) d'une roue arrière (1) à un support vertical (9, 12) et dans laquelle un support (5) situé entre le bras de roue et le premier bâti (8) ou le second bâti (13), respectivement, fait pivoter le bras de roue entre une orientation parallèle au support vertical et une orientation approximativement perpendiculaire au support vertical lorsque le support vertical se déplace de manière axiale respectivement vers le premier bâti ou vers le second bâti.

8. Poussette ou voiture d'enfant selon l'une des revendications précédentes, dans laquelle un moyen de synchronisation (24, 30, 31) couple les déplacements axiaux de l'arbre de bâti central (16) et des supports verticaux (9, 12).

9. Poussette ou voiture d'enfant selon la revendication précédente, dans laquelle le moyen de synchronisation comprend un engrenage (30) monté sur le premier bâti (8) et le second bâti (13) et des crémaillères (24, 31) montées sur l'arbre de bâti central (16) et les supports verticaux (9, 12).
